# EUROPÄISCHE PATENTSCHRIFT

(11) **EP 2 321 231 B1**
(45) Veröffentlichungstag und Bekanntmachung des Hinweises auf die Patenterteilung: **24.09.2014**
(21) Anmeldenummer: 08875414.8
(22) Anmeldetag: 04.12.2008
(51) Int. Cl.: C03C 3/078, C03C 3/087, C03C 4/08, C03C 13/00, C03C 4/00

(54) **HOCHTEMPERATURBESTÄNDIGES UND CHEMISCH BESTÄNDIGES GLAS UND GLASFASER MIT VERBESSERTER UV-LICHTTRANSMISSION SOWIE DEREN VERWENDUNG**
HIGHLY TEMPERATURE-RESISTANT AND CHEMICALLY RESISTANT GLASS AND GLASS FIBER HAVING IMPROVED UC LIGHT TRANSMISSION AND THE USE THEREOF
VERRE RÉSISTANT À DES TEMPÉRATURES ÉLEVÉES ET AUX PRODUITS CHIMIQUES ET FIBRE DE VERRE À TRANSMISSION DE LUMIÈRE UV AMÉLIORÉE ET LEUR UTILISATION

(30) Priorität: 14.08.2008 DE 102008037955
(43) Veröffentlichungstag der Anmeldung: 18.05.2011
(73) Patentinhaber: Bürger, Gerhard, 31139 Hildesheim (DE)
(72) Erfinder: Bürger, Gerhard, 31139 Hildesheim (DE)
(74) Vertreter: Gulde & Partner
(86) Internationale Anmeldenummer: PCT/EP2008/066812
(87) Internationale Veröffentlichungsnummer: WO 2010/017846

(56) Entgegenhaltungen:
- WO-A-02/20419
- WO-A-03/050049
- FR-A- 2 692 248
- GB-A- 1 391 384
- JP-A- 2000 247 677
- JP-A- 2000 247 683

## Beschreibung

Die Erfindung betrifft ein hochtemperaturbeständiges und chemisch beständiges Glas bzw. eine Glasfaser, die eine verbesserte UV-Lichttransmission aufweisen sowie deren Verwendung in UV-härtbaren Kompositen.

Aus der US-A-4026715 sind bor- und fluoridfreie Glaszusammensetzungen bekannt, die 54,5-60 % SiO₂, 9-14,5 % Al₂O₃, 17-24 % CaO, 2-4 % TiO₂, 1,5-4 % MgO und 1-6 % RO (R = Zn, Sr, Ba) und nicht mehr als 3 % Na₂O+K₂O+Li₂O enthalten und sich gut zu Fasern ziehen lassen und die Eigenschaften von E-Glas haben. Die chemische Beständigkeit dieser Fasern ist daher nicht zufriedenstellend.

Eine bekannte Faser gemäß EP-B-0832046 mit guter Temperaturstabilität und chemischer Beständigkeit enthält 59-62 % SiO₂, 12-15 % Al₂O₃, 20-24 % CaO, 1-4 % MgO, 0,1-2 % Na₂O+K₂O, 0-0,9 % TiO₂ und 0-0,5 % Fe₂O₃. Für eine Reihe von Einsatzzwecken ist jedoch die Temperaturstabilität nicht befriedigend.

Die WO03/050049 beschreibt eine Endlosglasfaser, bestehend aus SiO₂ 56-62 %; Al₂O₃ 11-20 %; CaO 20-24,5 %; TiO₂ 1,5-4 %; MgO 0,2-1 %; Na₂O 0,05-2 %; K₂O 0-2 %; Fe₂O₃.0,11-0,3 %, wobei die Faser eine Schrumpfung bei 800°C von weniger als 20 % hat. Die Lichtdurchlässigkeit dieser Faser ist für bestimmte Anwendungszwecke jedoch nicht zufriedenstellend.

Aus der GB-A-1391384 sind Glaszusammensetzungen auf Basis von SiO₂, Al₂O₃ und CaO bekannt, die weitere Komponenten wie z.B. ZnO, MnO, SrO enthalten können, wobei die in den Beispielen genannten Zusammensetzungen zumindest bei Al₂O₃ und CaO von der Erfindung abweichen. Das Glas zeigt auch andere Viskositäten und Liquidustemperaturen.

Die JP 2000-247677 beschreibt ein Glas auf Basis SiO₂, Al₂O₃ und CaO, das auch MgO + ZnO im Bereich von 1 - 12 Gew.-% enthält.

Die JP 2000-247683 A beansprucht ein Glas, das 0,5 - 3 Gew.-% B₂O₃ und 0,1 - 5 Gew.-% ZnO enthält.

In der FR 2692248 A1 sind ebenfalls Glaszusammensetzungen auf Basis von SiO₂, Al₂O₃ und CaO beschrieben, die zusätzlich immer 2 - 6 Gew.-% B₂O₃ enthalten, was sich auf die chemische und thermische Beständigkeit nachteilig auswirkt. Die mögliche Anwendung in Kompositen wird erwähnt.

Die WO 03/050049 A offenbart Endlosglasfasern mit verbesserter thermischer Beständigkeit, die als Füllmaterial in Autoschalldämpfer eingebracht werden oder als Roving texturiert und für Formteile verwendet werden.

Der Erfindung liegt die Aufgabe zugrunde, ein hochtemperaturbeständiges und chemisch beständiges Glas bzw. eine ebensolche Glasfaser bereitzustellen, die eine gute Lichttransmission/Brechungsindizes aufweisen.

Erfindungsgemäß bereitgestellt wird ein hochtemperaturbeständiges und chemisch beständiges Glas mit verbesserter Lichttransmission für UV-Lichtwellen mit einer Wellenlänge von 250-420 nm, dadurch gekennzeichnet, daß das Glas eine Zusammensetzung in Gew-% und bezogen auf das Gesamtgewicht allein auf Basis der folgenden Komponenten hat

| | |
|---|---|
| SiO₂ | 58,0 - 62,0 |
| Al₂O₃ | 11,0 - 15,0 |
| CaO | 22,0 - 25,0 |
| MgO | 0,1 - 0,8 |
| Na₂O | 0,04 - 1,2 |
| K₂O | 0,1 - 1,2 |
| TiO₂ | 0,2 - 1,2 |
| Fe₂O₃ | 0,05 - 0,5 |
| Cr₂O₃ | 0,002 - 0,085 |

Und das Glas eine Erweichungstemperatur von gleich oder größer als 920°C und eine Lichttransmission von 80-92 % hat.

Besonders bevorzugt sind solche Gläser oder Glasfasern, bei denen der SiO₂-Gehalt im Bereich von 59,8 - 61,3 % liegt.

Der Al₂O₃-Gehalt kann bevorzugt im Bereich von 13,0 - 15,0 % liegen, insbesondere 13,5 - 14,7 %.

Der CaO-Gehalt kann bevorzugt im Bereich von 22,6 - 24,4 liegen.

Der TiO₂-Gehalt liegt bevorzugt im Bereich 0,2 - 0,95 %.

Ein bevorzugter Bereich für die Erweichungstemperatur ist 920 - 970°C, insbesondere 925 - 960°C.

Die Lichttransmission des erfindungsgemäßen Glases liegt insbesondere im Bereich von 85 bis 91 %.

Die Lichttransmission wird nach DIN 67507 durchgeführt unter Verwendung eines Spektralphotometers mit Ulbricht-Kugel; der Messfehler beträgt ± 0,5 %.

Die Herstellung des erfindungsgemäßen Glases erfolgt nach bekannten Verfahren, ebenso wie die Herstellung der erfindungsgemäßen Glasfaser durch jedes konventionelle Verfahren zur Herstellung von Endlosglasfasern durchgeführt werden kann. Endlosglasfasern können durch zwei- oder einstufige Verfahren hergestellt werden. Dabei werden aus dem Gemenge Glaspellets oder Glaskugeln hergestellt, die in der zweiten Stufe wieder geschmolzen werden, und aus der gewonnenen Schmelze die Endlosfasern gezogen werden. Es kann auch aus dem Gemenge direkt eine Schmelze produziert werden, die zum Faserziehen verwendet wird. Die Faserbildung entsteht durch das Faserziehen mit einem Wickler und gleichzeitiger Erstarrung der Schmelze in den Glasfilamenten oder Glasfasern.

Ein bevorzugtes erfindungsgemäßes Verfahren besteht darin, dass das Schmelzen des Glasgemenges in einer oxidierenden Atmosphäre erfolgt und die Differenz zwischen Liquidustemperatur der Glasschmelze und Faserbildungstemperatur so eingestellt wird, dass sie gleich oder größer 75°C beträgt.

Oxidierende Atmosphäre bedeutet, dass das Verhältnis Sauerstoff zu Abgas im Bereich von 0,8 bis 1,6 liegt. Das Verhältnis FeO : Fe₂O₃ liegt zwischen 0,5 und 1,2.

Die Faserbildungstemperatur liegt bei Temperaturen zwischen 1270 und 1420°C. Das heißt, dass die Viskosität der Schmelze von 10³ Poise bei 1270°C und höher liegt, und die Liquidustemperatur mehr als 1190°C beträgt. Delta T für die Glasschmelze beträgt nicht weniger als 70°C, vorzugsweise mehr als 90°C und insbesondere mehr als 120°C.

Gegenstand der Erfindung ist auch die Verwendung eines Glases oder einer Glasfaser in Form einer Endlosglasfaser in einem Komposit, bestehend aus einer Glasfaser und einem UV-härtbaren Polyesterharz oder Vinylesterharz, wobei das Glas/ die Gasfaser eine Lichttransmission von 80 bis 92 % hat.

Das kann beispielsweise so erfolgen, dass eine Glasfasermatte oder ein Glasfaserschlauch mit einem UV-härtenden Polyesterharz oder Vinylesterharz imprägniert werden (Laminat) und anschließend nach entsprechender Formgebung eine statische oder mobile UV-Strahlungsquelle in die Nähe der Komposits gebracht wird und durch UV-Strahlung die Aushärtung innerhalb einer einstellbaren Zeit erfolgt. Die Wellenlänge der UV-Strahlungsquelle liegt dabei bei etwa 250-420 nm.

Bevorzugte Harze sind z.B. hochwertiges ungesättigtes Polyesterharz Typ 1140 oder Spezialharz Vinylester Typ 1310.

Die Härtung der sog. UP-Liner ausschließlich mit UV-Licht wird üblicherweise nur für Liner mit geringen Wanddicken zugelassen. Bei größeren Wanddicken (s > 7 mm) darf die UV-Härtung nur in Verbindung mit einer unterstützenden peroxidischen Härtung angewendet werden.

Da es beim Durchdringen der Glasfaserlagen mit den UV-Lichtwellen (im Nanometer-Bereich) ab einer gewissen Dicke (ca. 8 bis 10 mm) durch das Abwinkeln der Strahlen Probleme geben kann, wodurch eine ordentliche Durchhärtung des Laminates verhindert wird, wurden üblicherweise auch sonst aus der Warmhärtung bekannte Peroxide der Harz-Härter-Mischung beigefügt. Diese reagieren durch die Eigentemperatur bei der durch die UV-Strahlen angestoßenen Reaktion und setzen die Aushärtung so in den außenliegenden Randbereichen des Liners fort. Hierdurch wird zwar die Lagerstabilität eines UV-Lichthärte-Liners (sonst ca. 6 Monate) reduziert, die Durchhärtung des Laminates jedoch sichergestellt.

Eine besonders bevorzugte Ausführungsform der Erfindung besteht in einem Komposit, bei dem das Harz und die Glasfaser etwa die gleichen Brechungsindizes haben.

Da die Dicke von Glasfaser und Harz in Form des auszuhärtenden Komposits für die UV-Strahlungshärtung bedeutsam ist, sollte sie bekanntlich allgemein im Bereich von 2 bis 7 mm liegen. Mit der erfindungsgemäßen Glasfaser sind Wandstärken des Komposits bis zu 15 mm erreichbar, die problemlos ausgehärtet werden können. Wahlweise kann dies auch ohne Peroxide erfolgen, was ein besonderer Vorteil der Erfindung ist wegen der Verlängerung der Lagerstabilität.

Eine weitere Anforderung an das erfindungsgemäße Glas bzw. die Glasfaser ist die chemische Beständigkeit. Diese liegt allgemein bei 5,4 und 7,7 Gew.% (Massenverlust bei 10 % HCl für 24 h und 186 h). Für die vorliegende Erfindung liegt sie bei 4,8 und 6,8 Gew.% und ist damit deutlich besser.

Die erfindungsgemäße Glasfasern können auch als Füllmaterial in Schalldämpfern für Abgase direkt oder als Roving oder als Schlauch oder Matte eingebracht werden. Infolge ihrer hohen thermischen Beständigkeit und der guten chemischen Beständigkeit sind sie bekannten Fasern deutlich überlegen.

Eine weitere Ausführungsform der Verwendung besteht darin, dass der Glasfaserroving in einem Schalldämpfer in einer Kombination mit Stahlwolle eingesetzt wird, wobei ein zentrales perforiertes Rohr für die Abgasdurchleitung mit der Stahlwolle umwickelt ist, um diese Innenschale herum die erfindungsgemäße Endlosglasfaser wirr angeordnet ist und die Außenschale von einem Behälterraum mit Abgasauslass gebildet wird. Die Temperaturbeständigkeit und das Schrumpfungsverhalten der Glasfaser werden dadurch noch weiter verbessert. Die Temperaturbeständigkeit des erfindungsgemäßen Glases wird über die Transformationstemperatur bestimmt (DIN ISO 7884-8) und liegt im Bereich von 760 - 780°C.

Die Erfindung soll nachstehend durch Beispiele näher erläutert werden.

### Beispiel 1

Es wird in einer Labor-Glasschmelzanlage Glas hergestellt, das nach Analyse folgende Zusammensetzung hat (in Gew-%):
SiO₂ 60,7 %, Al₂O₃ 14,0 %, CaO 23,4 %, MgO 0,4 %, Na₂O + K₂O 0,75 %, TiO₂ 0,4 %, Fe₂O₃ 0,3 %, Cr₂O₃ 0,015 %.

Die Temperatur bei einer Viskosität von 10³ Poise beträgt 1291°C, die Liqidustemperatur beträgt 1200°C und die Differenz zwischen Liquidus- und Faserbildungstemperatur (delta T) beträgt 91 °C.

Aus diesem Glas werden mit Hilfe einer Laboranlage, in der ein Lochdüsentiegel aus Platin-Rhodium Legierung installiert ist, Fasern gezogen und zu einem Roving vereinigt. Das Glas wurde über die Verformungstemperatur von 1290°C erwärmt, und die Glasfasern wurden nach 30 min Haltezeit bei jeder um 10°C steigenden Temperatur gezogen. Das Faserziehintervall beträgt 1290 bis 1360°C. Das heißt, dass diese Zusammensetzung stabile Prozessabläufe für das Faserziehen innerhalb 70°C gewährleisten kann.

Die gezogenen Endlosglasfasern haben eine Erweichungstemperatur von 927°C und eine Lichttransmission von 89,9 %.

Die chemische Beständigkeit bei 10% HCl für 24 h und 186 h liegt bei 4,82 und 6,4 Gew.% (Massenverlust). Die Temperaturbeständigkeit liegt bei etwa 760°C.

### Beispiel 2

Die Fasern von Beispiel 1 werden zusammen mit einem lichthärtenden Polyesterharz vom Typ 1140 zu einem Laminat verarbeitet mit einer Dicke der Platte von 8 mm. Das optisch klare Laminat wird mit einer UV-Quelle bestrahlt und innerhalb von 5 Minuten gehärtet.

### Beispiel 3

Es wird ein Glas entsprechend Beispiel 1 hergestellt mit folgender Zusammensetzung: 60,2 SiO₂, 13,83 Al₂O₃, 23,5 CaO; 0,31 MgO, 0,18 Na₂O, 0,54 K₂O, 1,2 TiO₂, 0,25 Fe₂O₃, 0,03 Ca₂O₃.

Die Liquidustemperatur beträgt 1183°C, und delta T 100°C. Das Faserziehintervall beträgt 1270 bis 1350°C. Die gezogenen Endlosglasfasern haben eine Erweichungstemperatur von 922°C.

### Beispiel 4

Die Fasern von Beispiel 3 werden wie im Beispiel 2 verarbeitet zu einer Platte von 9,5 mm und mit UV-Strahlung innerhalb von 7 Minuten gehärtet.

## Patentansprüche

1. Hochtemperaturbeständiges und chemisch beständiges Glas mit verbesserter Lichttransmission für UV-Lichtwellen mit einer Wellenlänge von 250 - 420 nm, **dadurch gekennzeichnet, daß** das Glas eine Zusammensetzung in Gew-% und bezogen auf das Gesamtgewicht allein auf Basis der folgenden Komponenten hat
| | |
|---|---|
| SiO₂ | 58,0 - 62,0 |
| Al₂O₃ | 11,0 - 15,0 |
| CaO | 22,0 - 25,0 |
| MgO | 0,1 - 0,8 |
| Na₂O | 0,04 - 1,2 |
| K₂O | 0,1 - 1,2 |
| TiO₂ | 0,2 - 1,2 |
| Fe₂O₃ | 0,05 - 0,5 |
| Cr₂O₃ | 0,002 - 0,085, |
und das Glas eine Erweichungstemperatur von gleich oder größer als 920°C und eine Lichttransmission von 80-92 % hat.

2. Glas nach Anspruch 1, **dadurch gekennzeichnet, daß** der Gehalt an SiO₂ im Bereich von 59,8 bis 61,3 Gew.-% liegt.

3. Glas nach einem der Ansprüche 1 und 2, **dadurch gekennzeichnet, daß** der Gehalt an Al₂O₃ im Bereich von 13,0 bis 15,0 Gew.-% liegt.

4. Glas nach einem der Ansprüche 1 - 3, **dadurch gekennzeichnet, daß** der Gehalt an Al₂O₃ im Bereich von 13,5 bis 14,7 Gew.-% liegt.

5. Glas nach einem der Ansprüche 1 - 4, **dadurch gekennzeichnet, daß** der Gehalt an TiO₂ im Bereich von 0,2 - 0,95 Gew.-% liegt.

6. Glas nach einem der Ansprüche 1 - 5, **dadurch gekennzeichnet, daß** die Erweichungstemperatur in Bereich von 925-970°C liegt.

7. Glas nach einem der Ansprüche 1 - 6, **dadurch gekennzeichnet, daß** das Glas eine Lichttransmission für UV-Lichtwellen mit einer Wellenlänge von 250 - 420 nm von 85 bis 91% haben.

8. Glas nach einem der Ansprüche 1 - 7, **dadurch gekennzeichnet, daß** es in Form einer Glasfaser vorliegt.

9. Verwendung eines Glases nach Anspruch 1 in einem Komposit, bestehend aus einem Glas und einem UV-härtbaren Polyesterharz oder Vinylesterharz, wobei das Glas eine Lichttransmission von 80 bis 92 % und das Polyesterharz eine Lichttransmission von 89 bis 94 % haben für UV-Lichtwellen mit einer Wellenlänge von 250 - 420 nm.

10. Verwendung nach Anspruch 9, **dadurch gekennzeichnet, daß** sie bei einem Komposit mit einer Wandstärke von bis zu 15 mm erfolgt.

11. Verwendung nach einem der Ansprüche 9 oder 10, **dadurch gekennzeichnet, daß** das Glas in Form einer Endlosglasfaser vorliegt.

12. Verwendung nach einem der Ansprüche 9 bis 11, **dadurch gekennzeichnet, daß** das Harz und die Glasfaser die gleichen Brechungsindizes haben.

## Claims

1. Highly temperature-resistant and chemically resistant glass having an improved light transmission for UV light waves having a wavelength of 250 to 420 nm,
**characterized in that** the glass has a composition in weight percent and related to the total weight solely on the basis of the following components:
| | |
|---|---|
| SiO₂ | 58.0 - 62.0 |
| Al₂O₃ | 11.0 - 15.0 |
| CaO | 22.0 - 25.0 |
| MgO | 0.1 - 0.8 |
| Na₂O | 0.04 - 1.2 |
| K₂O | 0.1 - 1.2 |
| TiO₂ | 0.2 - 1.2 |
| Fe₂O₃ | 0.05 - 0.5 |
| Cr₂O₃ | 0.002 - 0.085, |
and the glass has a softening point of ≥ 920°C and a light transmission of 80 to 92%.

2. Glass according to claim 1, **characterized in that** the SiO₂ content is in the range of 59.8 to 61.3 weight percent.

3. Glass according to any one of claims 1 and 2, **characterized in that** the Al₂O₃ content is in the range of 13.0 to 15.0 weight percent.

4. Glass according to any one of claims 1 to 3, **characterized in that** the Al₂O₃ content is in the range of 13.5 to 14.7 weight percent.

5. Glass according to any one of claims 1 to 4, **characterized in that** the TiO₂ content is in the range of 0.2 to 0.95 weight percent.

6. Glass according to any one of claims 1 to 5, **characterized in that** the softening point is in the range of 925 to 970°C.

7. Glass according to any one of claims 1 to 6, **characterized in that** the glass has a light transmission of 85 to 91 % for UV light waves having a wavelength of 250 to 420 nm.

8. Glass according to any one of claims 1 to 7, **characterized in that** it is in the form of a glass fiber.

9. Use of a glass according to claim 1 in a composite consisting of a glass and a UV-curable polyester resin or vinyl ester resin, wherein the glass has a light transmission of 80 to 92% and the polyester resin a light transmission of 89 to 94% for UV light waves having a wavelength of 250 to 420 nm.

10. Use according to claim 9, **characterized in that** it takes place with a composite having a wall thickness of up to 15 mm.

11. Use according to any one of claims 9 or 10, **characterized in that** the glass is in the form of a continuous glass fiber.

12. Use according to any one of claims 9 to 11, **characterized in that** the resin and the glass fiber have the same indices of refraction.

## Revendications

1. Verre résistant à des températures élevées et aux produits chimiques, avec une transmission de lumière améliorée pour des ondes lumineuses UV ayant une longueur d'onde de 250 - 420 nm, **caractérisé en ce que** le verre a une composition en %-poids et rapportée au poids total uniquement sur la base des composants suivants
| | |
|---|---|
| SiO₂ | 58,0 - 62,0 |
| Al₂O₃ | 11,0 - 15,0 |
| CaO | 22,0 - 25,0 |
| MgO | 0,1 - 0,8 |
| Na₂O | 0,04 - 1,2 |
| K₂O | 0,1 - 1,2 |
| TiO₂ | 0,2 - 1,2 |
| Fe₂O₃ | 0,05 - 0,5 |
| Cr₂O₃ | 0,002 - 0,085, |
et **en ce que** le verre a une température de ramollissement égale ou supérieure à 920°C et une transmission de lumière de 80-92 %.

2. Verre selon la revendication 1, **caractérisé en ce que** la teneur en SiO₂ se situe dans la plage de 59,8 à 61,3 %-poids.

3. Verre selon une des revendications 1 et 2, **caractérisé en ce que** la teneur en Al₂O₃ se situe dans la plage de 13,0 à 15,0 %-poids.

4. Verre selon une des revendications 1 - 3, **caractérisé en ce que** la teneur en Al₂O₃ se situe dans la plage de 13,5 à 14,7 %-poids.

5. Verre selon une des revendications 1 - 4, **caractérisé en ce que** la teneur en TiO₂ se situe dans la plage de 0,2 - 0,95 % poids.

6. Verre selon une des revendications 1 - 5, **caractérisé en ce que** la température de ramollissement se situe dans la plage de 925-970 °C.

7. Verre selon une des revendications 1 - 6, **caractérisé en ce que** le verre a une transmission de lumière pour les ondes lumineuses UV ayant une longueur d'onde de 250 - 420 nm de 85 à 91 %.

8. Verre selon une des revendications 1 - 7, **caractérisé en ce qu'**il se présente sous la forme d'une fibre de verre.

9. Utilisation d'un verre selon la revendication 1 dans un composite, composé d'un verre et d'une résine polyester ou résine vinylester durcissable aux UV, le verre ayant une transmission de lumière de 80 à 92 %, et la résine de polyester ayant une transmission de lumière de 89 à 94 % pour des ondes lumineuses UV ayant une longueur d'onde de 250 - 420 nm.

10. Utilisation selon la revendication 9, **caractérisée en ce qu'**elle s'effectue dans le cas d'un composite ayant une épaisseur de paroi allant jusqu'à 15 mm.

11. Utilisation selon une des revendications 9 ou 10, **caractérisée en ce que** le verre se présente sous la forme d'une fibre de verre continue.

12. Utilisation selon une des revendications 9 à 11, **caractérisée en ce que** la résine et la fibre de verre ont les mêmes indices de réfraction.
